# EUROPÄISCHE PATENTSCHRIFT

(11) **EP 0 990 557 B1**
(45) Veröffentlichungstag und Bekanntmachung des Hinweises auf die Patenterteilung: **28.12.2005**
(21) Anmeldenummer: 99119509.0
(22) Anmeldetag: 01.10.1999
(51) Int. Cl.: B60P 1/00, B60P 3/06, B60P 3/40, B60P 3/00

(54) **Transportvorrichtung für Schwergut im Ro-Ro-Betrieb und Arbeitsverfahren zur Handhabung der Transportvorrichtung**
Transport device for heavy loads in ro-ro transport and method for using the transport device
Dispositif de transport pour charges lourdes dans le transport du type ro-ro et procédé pour utiliser le dispositif de transport

(30) Priorität: 02.10.1998 DE 19845523
(43) Veröffentlichungstag der Anmeldung: 05.04.2000
(73) Patentinhaber: Rzehulka, Wolfgang Georg, 21266 Jesteburg (DE)
(72) Erfinder: Rzehulka, Wolfgang Georg, 21266 Jesteburg (DE)
(74) Vertreter: Schupfner, Gerhard D.

(56) Entgegenhaltungen:
- GB-A- 580 879
- US-A- 4 746 260
- US-A- 4 820 110
- PATENT ABSTRACTS OF JAPAN vol. 010, no. 092 (M-468), 9. April 1986 (1986-04-09) & JP 60 229835 A (ENU TEII ESU:KK;OTHERS: 01), 15. November 1985 (1985-11-15)

## Beschreibung

Die Erfindung bezieht sich auf eine Transportvorrichtung für den Ro-Ro-Betrieb, mittels der Bahnfahrzeuge in Ladezonen von Schiffen einbringbar, in diesen transportierbar und wieder aus ihnen ausbringbar sind, mit einem mit Bahnschienen versehenen Träger (1), auf dem die langgestreckten, mit Rädern versehenen Bahnfahrzeuge (2) mit ihren Rädern ruhen und der mittels Transporträdern (16a,22) von Transporteinrichtungen verfahrbar ist und auf ein Arbeitsverfahren zur Handhabung der Transportvorrichtung.

Im Ro-Ro-Betrieb kommen Transportvorrichtungen zum Einsatz, auf denen Schwergut, wie Schienenfahrzeuge oder andere langgestreckte Teile transportiert werden. Diese Transportvorrichtungen bestehen aus einem langestreckten Träger, der an seiner Bodenseite mit Transporteinrichtungen, wie Fahrwerken mit Transporträdern versehen ist. Diese Transportvorrichtungen können an ihrer Oberseite auch mit Schienen zum Aufrollen von Schienenfahrzeugen versehen sein.

Die Transportvorrichtungen mit ihren Fahrwerken werden zunächst für Transportzwecke in Bereitschaft gehalten. Werden sie benötigt, dann werden sie beispielsweise zum Verladen von Schienenfahrzeugen so an eine Verladerampe gerollt, daß die Schienenstränge der Transportvorrichtung und eines Gleisanschlusses fluchten. Dann werden die Schienenfahrzeuge auf die Transportvorrichtung gerollt und festgelascht. Diese Transporteinheit aus Schienenfahrzeug und Transportvorrichtung wird beispielsweise vom Schwanenhals einer Zugmaschine erfaßt und von der Bahnverladerampe in den Laderaum eines Ro-Ro-Schiffes gefahren. Dort erhält die Transporteinheit ihren Transportplatz und wird im Schiff verlascht.

Das Schiff geht dann auf die Reise. Im Zielhafen wird die Transporteinheit wieder aus dem Ro-Ro-Schiff heraus- und an die Entladerampe gefahren. Dort rollt das Schienenfahrzeug wieder auf ein Gleis eines Gleisanschlusses und ist am Zielort einsatzfähig. Die Transportvorrichtung wird zu einem Lagerplatz verfahren und wartet dort auf die Ankunft eines anderen Ro-Ro-Schiffes, denn nur ein Ro-Ro-Schiff kann die Transportvorrichtung wieder zum Ausgangshafen zurückbringen. Das Schiff, das die Transporteinheit zum Zielhafen brachte, ist längst wieder weg, weil die Liegezeiten außerordentlich kurz bemessen sind.

Da die Transportvorrichtungen gemietet sind, verlängern sich die Mietzeiten durch die Aufbewahrungszeiten am Zielhafen. Damit sind erhebliche Kosten verbunden.

Es ist aus der US 4 820 110 bekannt, einen Container, der an seiner Bodenseite Einschuböffnungen für Gabelarme aufweist, mit Fahrgestellen zu versehen. Dazu werden Gabelarme der Fahrgestelle an die Einschuböffnungen herangeschoben. Mittels einer Zugseilschleife werden die Gabelarme in die Einschuböffnungen hineingezogen. Bei sehr schweren Lasten, wie Lokomotiven, Schnellbahnwagen oder auch Transformatoren versagt das Einzugsystem mit der Seilschleife absolut. Diese Vorrichtung ist nur bei relativ leichten Gewichten einsetzbar. Es wird kein seriöser Vorschlag für das anschließende Entfernen der Fahrgestelle angeboten.

Aus JP 60-229 835(A) Abstract ist es als nächster Stand aus Technik bekannt, einen Träger für schweres Gut von beiden Längsenden her mittels Schwanenhälsen von zwei Zugmaschinen anzuheben. Dieser Stand der Technik setzt voraus, daß die Einschuböffnungen in dem Träger die Höhe der Schwanenhälse haben. Bei begrenzten Höhenverhältnissen, wie bei der Verladung vor Schienenfahrzeugen, ist dies nicht gegeben. Die Notwendigkeit von zwei Zugmaschinen erhöht den maschinellen Aufwand ganz erheblich und ist unwirtschaftlich.

Aus der GB 3492 ist das Abladen eines Holzstapels von einem Einachsfahrzeug bekannt, wobei ein schwenkbarer Exzenter das Absenken des Holzstapels auf zwei Lagerböcke ermöglicht.

Es ist Aufgabe der Erfindung, die Transportvorrichtung der eingangs erwähnten Art so zu gestalten, daß sie wirtschaftlicher einsetzbar ist und zwar sowohl hinsichtlich der Verkürzung der Wartezeiten in den Zielhäfen als auch des gesamten Aufbaues der Transportvorrichtung.

Die gestellte Aufgabe ist erfindungsgemäß mit einer Merkmalskombination gelöst, die folgende Merkmale umfaßt:
a) der Träger und die Transporteinrichtungen voneinander unabhängig handbare Einheiten sind, von denen die eine eine Zugmaschine mit Schwanenhals und die andere ein antriebloser Radsatz ist,
b) der Träger außerhalb der Transportzeiten getrennt von den Transporteinrichtungen unbeweglich auf einem Untergrund ruht, ganz gleich ob er beladen oder unbeladen ist und nur während seiner Transportzeiten von einer Ladezone zu einer anderen kurzfristig durch das Hinzufügen der Transporteinrichtungen verrollbar ist,
c) der Träger als Hohlkörper mit zu seinen Längsenden hin offenen Taschen zur an sich bekannten Aufnahme von Einschubgabeln ausgebildet ist,
d) die als Zugmaschine ausgebildete Transporteinrichtung an dem einen Längsende in eine offene Tasche eines Übergangsträgers einschiebbar ist, der seinerseits mit einer Einschubgabel in die Taschen des Trägers greift,
e) der Träger mittels der Transporteinrichtung an dem Längsende mittels des Schwanenhalses anheb- und absenkbar ist,
f) die antriebslose Transporteinrichtung mit ihrer Einschubgabel in das offene Längsende des Trägers einschiebbar bzw. wieder daraus entfernbar ist, wenn der Träger unter Zuhilfenahme zumindest einer Kippstütze, z.B. in der Form eines untergelegten Balkens, von dem Schwanenhals der Zugmaschine verkippt ist.

Die im Transportsystem für sich allein selbstständig handhabbare Grundeinheit ist damit der Träger. Er wird als Grundeinheit auf Vorrat gelagert. Er wird an sich nur dann, wenn er beladen in den Laderaum eines Schiffes gefahren oder beladen aus dem Laderaum des Schiffes herausgefahren wird, mit den die Transporträder aufweisenden Transporteinrichtungen bestückt. Selbstverständlich wäre es auch möglich, den Träger mittels der Transporteinrichtungen zu seinen Warteplätzen zu verrollen. Wichtig ist, daß die Transporteinrichtungen nur während des Verrollens von einer Ladezone zu einer anderen oder zu Warteplätzen eingesetzt werden. Wenn der Träger in Ruhestellung verharrt, dann sind die Transporteinrichtungen entfernt.

Damit sind wesentliche Vorteile verbunden. Befindet sich der Träger auf Warteplätzen, dann läßt er sich mit anderen, wenn es die Hafenausrüstung gestattet, raumsparend gestapelt lagern. Der Träger ist mit jedem Containerschiff transportierbar und braucht für seinen Rücktransport nicht auf die Ankunft eines Ro-Ro-Schiffes zu warten. Der Rücktransport der Träger kann, wenn es möglich ist, auch über Land mit Tiefladern vorgenommen werden. Die Mietzeiten lassen sich so deutlich verringern. Durch den schnelleren Umschlag werden die Träger auch wirtschaftlicher.

Die Wirtschaftlichkeit wird auch noch dadurch erhöht, daß nicht mehr für jeden Träger ihm zugeordnete Transporteinrichtungen bereitstehen müssen. Wird für eine Schiffladung nur ein Satz von Transporteinrichtungen benötigt und eingesetzt, dann lassen sich damit enorme Einsparungen erzielen.

Nach einer weiteren Ausgestaltung der Erfindung ist vorgesehen, daß der als Hohlkörper ausgebildete Träger zu seinen Längsenden hin offene Taschen aufweist, die Aufnahmen für Einschubgabeln der Transporteinrichtungen bilden. Die Einschubgabeln sind dabei vorzugsweise in Einschubgabelarme unterteilt. Die Transporteinrichtungen werden durch ihr Einstecken in die Taschen an den Längsenden mit dem Träger verbunden. Dazu wird der Träger über eine Kippstütze wie ein Schaukelbalken verkippt. An jedem Ende des Trägers befindet sich dann eine Transporteinrichtung. Die Montage ist einfach und läßt sich rasch vornehmen. Die beiden zum Einsatz kommenden Transporteinrichtungen haben vorzugsweise einen unterschiedlichen Aufbau.

Eine als Frontteil ausgebildete Fronttransporteinrichtung besteht aus einer Zugmaschine mit einem Schwanenhals, der in eine offene Tasche des Trägers selbst oder in eine Tasche eines Übergangsträgers einschiebbar ist, der seinerseits mit einer Einschubgabel in die Tasche des Trägers greift, wobei der Träger an diesem Längsende mittels des Schwanenhalses zum Unterlegen und Entfernen der Kippstütze sowie zum Verrollen anheb- und absenkbar ist. Die Zugmaschine dient also zum Anheben des Trägers an dem von ihr ergriffenen Trägerende und übernimmt mit dem schwenkbaren Schwanenhals zugleich die Funktion des bisher benötigten Drehgestells. Der Übergangsträger stellt die Verbindung zwischen dem Schwanenhals und dem von ihm manipulierten Längsende des Trägers her, da der Schwanenhals zu hochbauend ausgebildet.

Der Schwanenhals einer Zugmaschine ist nicht nur zu hochbauend für den Träger ausgebildet; er arbeitet auch zu ungenau, um die Einschubgabel der Transporteinrichtungen exakt genug in die offenen Längsenden des Trägers einzuführen. Ein Gabelstapler kann diesen Einschiebevorgang exakt genug durchführen, indem er die Gabelarme des Übergangsträgers in den Träger einfährt und erst dann der Schwanenhals den hoch genug gebauten Übergangsträger erfaßt.

Nach einer weiteren Ausgestaltung der Erfindung ist vorgesehen, daß der in der Länge und gegebenenfalls auch in der Breite variable Träger die Länge einer Einheit eines Schienenfahrzeuges aufweisen kann und aus parallelen Doppel-T-Trägern besteht, die in Längsrichtung mittels oben und unten aufgesetzter Deckplatten verbunden sind. Die Längenveränderung kann durch das Ansetzen oder Abnehmen von Verlängerungsstücken vorgenommen werden. Eine Verkürzung ist beispielsweise bei dem Transport kürzerer Güter, wie Transformatoren, sinnvoll. Auch bietet die Verkürzung den Vorteil, daß die Träger auf dem Landwege ohne aufwendige Begleitmaßnahmen transportierbar werden.

Nach einer weiteren Ausgestaltung der Erfindung ist vorgesehen, daß die Doppel-T-Träger in vorgegebenen Abständen mittels Querwänden verbunden sind. Damit wird die Verwindungssteifigkeit erhöht. Vorzugsweise werden drei parallele Doppel-T-Träger eingesetzt, von denen einer in der Mitte zwischen den anderen plaziert ist. Die Einschubgabeln können paarweise in die sich dabei ausbildenden parallelen Hohlräume eingreifen.

Nach einer weiteren Ausgestaltung der Erfindung ist vorgesehen, daß Bahnschienen innerhalb des Trägers mittels Unterdeckspanten zusätzlich abgestützt sind. Die Bahnschienen können durch seitlich von ihnen aufgebrachte Holzplanken in die obere Abschlußebene eingebettet sein, um den Transport anderer Güter nicht zu behindern und selbst gut stapelbar zu sein.

Nach einer weiteren Ausgestaltung der Erfindung ist vorgesehen, daß der Träger und die Einschubgabeln mit horizontalen Durchbrüchen versehen sind, die beim Einschieben so zum Fluchten bringbar sind, daß durch sie Verriegelungsbolzen schiebbar sind. Auf diese Weise lassen sich die eingeschobenen Transporteinrichtungen sicher in dem Träger verriegeln.

Nach einer weiteren Ausgestaltung der Erfindung ist vorgesehen, daß die Kippstütze aus einem ausreichend druckstabilen Holz besteht. Man muß diese Kippstütze als ein außerordentlich einfaches und wirkungsvolles Element ansehen, daß trotz enormer Einfachheit allen Anforderungen gerecht wird.

Um die Transportvorrichtung bequem und schnell mit den Transporteinrichtungen versehen zu können, ist ein besonderes Arbeitsverfahren vorgesehen. Dies ist dadurch gekennzeichnet, daß in ein Längsende des Trägers, um ihn verrollbar zu machen, zunächst der Zwischenträger mit seiner Einschubgabel eingesetzt wird, wonach die Transporteinrichtung mit ihrem Schwanenhals dieses Längsende anhebt und unter den Träger die Kippstütze gelegt wird, die den Träger zu einem Schaukelbalken macht, daß die Transporteinrichtung das angehobene Längsende danach soweit absenkt, daß sich das andere Längsende des Trägers bei der nun einsetzenden Schaukelverkippung hebt und in die offene Tasche dieses Längsendes die Einschubgabel der anderen, mit dem Fahrwerk versehenen Transporteinrichtung einschiebbar ist, daß der Träger nach dem Einschieben dieser Einschubgabel der Transporteinrichtung mit dem Fahrwerk (20) von der anhebenden Transporteinrichtung wieder angehoben wird bis das Fahrwerk den Untergrund berührt und die Kippstütze entfernt wird, womit die Transportvorrichtung verrollbar ist.

Zum Entfernen der Transporteinrichtungen wird das Arbeitsverfahren in umgekehrter Reihenfolge durchgeführt und zwar in einer Weise, die dadurch gekennzeichnet ist, daß der Träger, um ihn nach einem Verrollen wieder unbewegbar zumachen, zunächst an seinem einen Längsende mittels der zum Anheben eingerichteten Transporteinrichtung soweit angehoben wird, daß unter ihn die Kippstütze legbar ist, daß die anhebende Transporteinrichtung das angehobene Längsende danach soweit absenkt, daß sich das andere Längsende des Trägers bei der nun einsetzenden Schaukelverkippung hebt und aus dessen Tasche die Einschubgabel der mit dem Fahrwerk versehenen Transporteinrichtung herausgezogen wird, und daß der Träger nach dem Herausziehen dieser Einschubgabel der mit dem Fahrwerk versehenen Transporteinrichtung am abgesenkten Längsende bis zum Aufsetzen des anderen Längsendes auf den Untergrund angehoben und die Kippstütze entfernt wird, wonach der Träger durch das erneute Absenken des angehobenen Längsendes von der zum Anheben eingerichteten Transporteinrichtung vollends zum Untergrund abgesenkt wird und wieder unbeweglich ist, wonach der Zwischenträger entfernt wird.

Unabhängig von der Anzahl der auf einem Schiff gleichzeitig transportierten beladenen Träger werden vorzugsweise nur die für einen Träger benötigten Transporteinrichtungen auf dem Schiff mitgeführt werden. Damit ist eine erhebliche Ersparnis verbunden.

Die Erfindung wird anhand der Zeichnungen näher erläutert. Es zeigen:
Fig. 1 die zwei Enden eines Trägers einer Transportvorrichtung, für den Transporteinrichtungen vorgesehen sind, die vom Träger entfernbar sind,
Fig. 2 einen Schnitt durch den Träger längs einer Linie II-II in Fig. 1,
Fig. 3 einen Gabelstapler, der einen Übergangsträger in ein offenes Längsende des Trägers nach Fig. 1 einschiebt,
Fig. 4 den Träger nach Fig. 1, der an seinen beiden Längsenden mit angesetzten Transporteinrichtungen versehen und zum Transport angehoben ist,
Fig. 5 den auf dem Grund aufliegenden Träger, mit einem auf ihn aufgerollten Waggon,
Fig. 6 das einseitige Anheben des Trägers mittels des Schwanenhalses einer Transportmaschine, die einen in den Träger eingeschobenen Übergangsträger erfaßt, und das Unterlegen einer Kippstütze, die dem Verkippen des Trägers dient,
Fig. 7 das Niederdrücken des Trägers an der Seite des Schwanenhalses und Verkippen des Trägers über der Kippstütze, sodaß sich das andere Ende des Trägers vom Boden hebt, und eine Transporteinrichtung mit Radsätzen, die zum Einschieben in dieses Trägerende bereitgehalten ist,
Fig. 8 den Träger nach dem Einschieben der Transporteinrichtung in beide Längsenden des Trägers im angehobenen Zustand.

Die Transportvorrichtung nach der Erfindung setzt sich aus drei einzeln hantierbaren Hauptteilen zusammen. Diese Hauptteile sind ein langgsstreckter Träger 1 und zwei Transporteinrichtungen F und H. Die eine Transporteinrichtungen F, die Fronttransporteinrichtung, ist eine Zugmaschine 16, die den Träger 1 vorzugsweise über einen zwischengefügten Übergangsträger 10 an einem Längsende 1e erfassen, anheben und absenken kann. Der Übergangsträger 10 hat eine Einschubgabel 14, die in das vordere Längsende 1e des Trägers 1 einschiebbar ist. Die Transporteinrichtung F ist auch dazu eingerichtet, den angehobenen Träger 1 von einer Ladezone zu einer anderen zu verfahren. Die andere Transporteinrichtung H, die Hecktransporteinrichtung, besteht aus einem Fahrwerk 20 mit Transporträdern 22 und einer Einschubgabel 20, die in das hintere Längsende 1f des Trägers 1 einschiebbar ist.

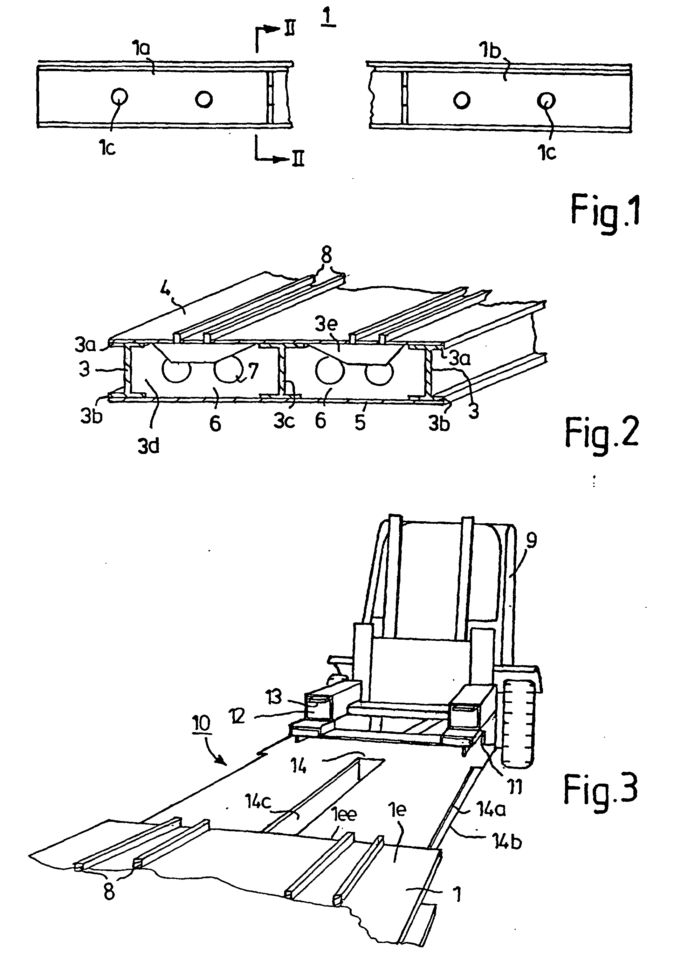

Der in den Fig. 1 und 2 dargestellte langgestreckte Träger 1 hat beispielsweise eine Länge von 120 ft oder 36 m. Eine große Länge ermöglicht die Aufnahme eines Schienenfahrzeuges, wie eines Waggons 2. Eine kürzere Länge eignet sich zum Transport, beispielsweise von Bahntransformatoren. Die Länge des Trägers 1 ist auf nicht dargestellte Weise veränderlich, beispielsweise durch ein Längsverschieben von Trägerteilen gegeneinander oder durch das Ansetzen von Verlängerungsstücken. Auch die Breite des Trägers 1 kann auf nicht dargestellte Weise an die zu transportierenden Güter angepaßt werden. Bevorzugte Transportgüter sind Schienenfahrzeuge und langgestreckte Bauteile.

In der Darstellung nach Fig. 1 sind nur die Längs- oder Kopfenden 1a und 1b des Trägers 1 abgebildet. In diesen Längs- oder Kopfenden 1a und 1b sind Durchbrüche 1c vorgesehen, durch die Verriegelungsbolzen 1d schiebbar sind.

Fig. 2 zeigt einen Schnitt durch den Träger 1 nach Fig. 1 längs der Linie II-II. Man erkennt, daß der Träger 1 als Hohlkörper ausgebildet ist und drei parallel zueinander angeordnete Doppel-T-Träger 3 aufweist. Je ein Doppel-T-Träger 3 befindet sich an den langen Außenrändern, einer in der Mitte. Die Doppel-T-Träger 3 sind an ihren Oberseiten 3a mit oberen Abdeckplatten 4 und an ihren Unterseiten 3b mit unteren Abdeckplatten 5 versehen. In bestimmten Abständen sind in dem Träger 1 verstärkende Querwände 6 vorgesehen, die Durchbrüche 7 aufweisen. Auf den oberen Abdeckplatten 4 befinden sich Bahnschienen 8, um das Auffahren von Schienenfahrzeugen 2 verschiedener Spur zu ermöglichen. Unterdeckspanten 3e unterlegen die Bahnschienen 8. Der Träger 1 ist in seinem Ruhezustand frei von den Transporteinrichtungen F und H. Er liegt auf einem Untergrund A auf.

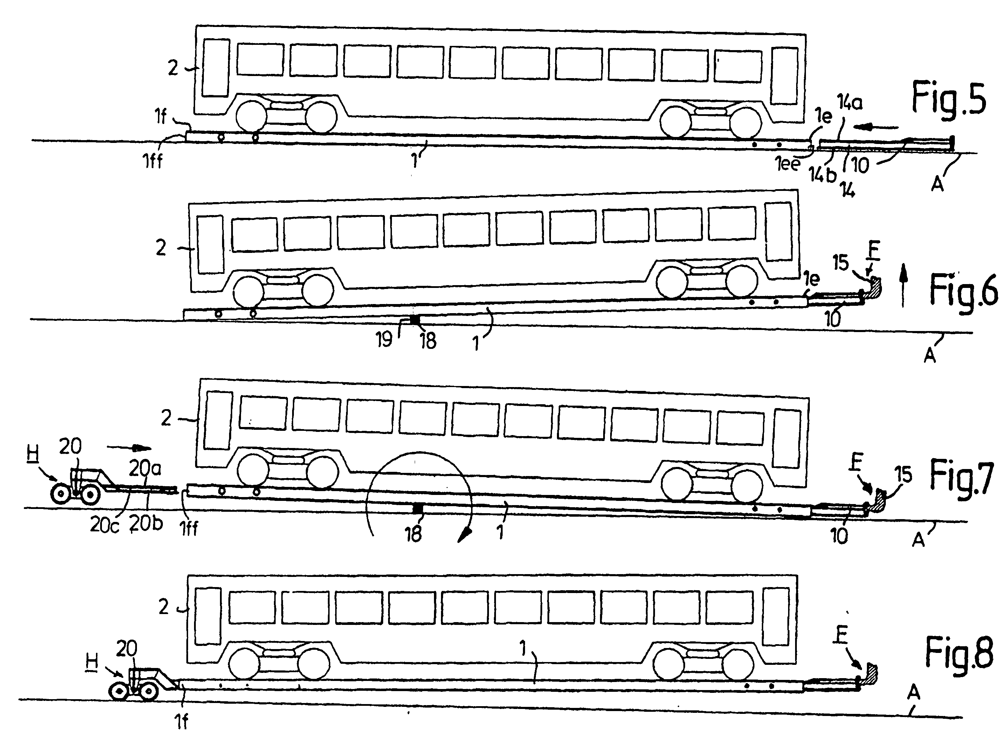

Fig. 3 zeigt ein offenes Längsende 1e des Trägers 1, das als Aufnahmetasche 1ee ausgebildet ist, in die die Einschubgabel 14 des Übergangsträger 10 der Transporteinrichtung F einschiebbar ist. Fig. 5 zeigt den Übergangsträger 10, wie er sich vor dem offenen Längsende 1e befindet. Ein Gabelstapler 9 (Fig. 3) ist gerade dabei, den Übergangsträger 10 in die Tasche 1ee am offenen Längsende 1e des Trägers 1 einzuschieben. Der Übergangsträger 10 besteht aus einem Zentralstück 11, an dem Aufnahmetaschen 12 für die Gabelarme 13 des Gabelstaplers 10 vorgesehen sind. Die am Zentralstück 11 angeordnete Einschubgabel 14 besteht vorzugsweise aus paarweise übereinander angeordneten Einschubgabelnarmen 14a und 14b. In einen vertikalen Spalt 14c zwischen ihnen kann beim Einschieben der vertikale Teil 3c des mittleren Doppel-T-Trägers 3 eingreifen. Die Einschubgabelarme 14a und 14b selbst fahren paarweise übereinander in die Hohräume 3d zwischen den Doppel-T-Trägern 3 ein. Der Gabelstapler 9 ist in der Lage, die Einschubgabel 14 exakt in die Hohlräume 3d einzuführen. In eingeschobener Stellung wird ein Verriegelungsbolzen 1d durch die fluchtenden Durchbrüche 1c des Trägers 1 und des Übergangsträgers 10 geschoben und gesichert. Damit ist der Übergangsträger 10 verrutschfest mit dem Träger 1 verbunden.

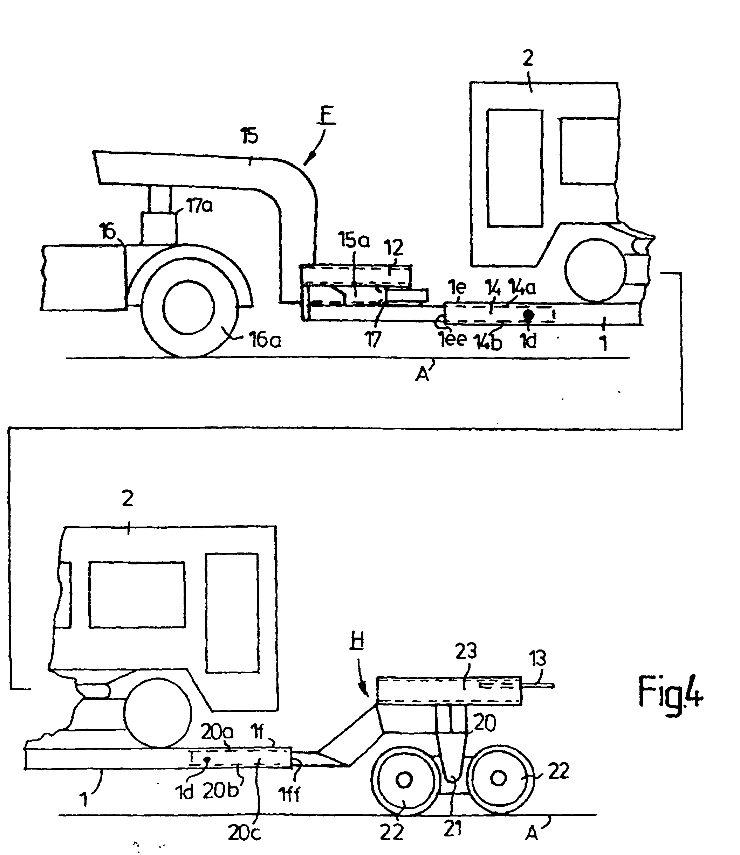

Wenn der Übergangsträger 10 eingeschoben und eingeschoben gesichert ist, dann greift, wie Fig. 4 zeigt, der Schwanenhals 15 einer Zugmaschine 16 mit einem Hebearm 15a in eine weitere Aufnahmetasche 17 des Zentralstückes 11 des Übergangsträgers 10. Die Zugmaschine 16 mit dem Schwanenhals 15 und der Übergangsträger 10 sind die Transporteinrichtung F, mit der der Träger 1 mit seiner Last, beispielsweise dem Waggon 2, an seinem vorderen Längsende 1e ein Fahr- und Hebewerk erhält. Die Transporträder 16a dieser Fronttransporteinrichtung F sind die Räder der Zugmaschine 16.

Der Träger 1 wird über eine hydraulische Stellvorrichtung 17a an der Zugmaschine 16 angehoben, um eine Kippstütze 18 unter den Träger 1 legen zu können. Das Anheben des Trägers mittels des Schwanenhalses 15 ist aus Fig. 6 zu erkennen. Auch ist aus Fig. 6 zu erkennen, daß nach einem ausreichenden Anheben um beispielsweise 750 mm die Kippstütze 18 unter den Träger 1 legbar ist und zwar an einer Drehpunktstelle 19, bei der der Träger 1 in einen Schaukelbalken umgewandelt wird.

Fig. 7 zeigt, wie nun das Längsende 1e des Trägers 1 vom Schwanenhals 15 niedergedrückt wird, so daß er nun um die Drehpunktstelle 19 kippt und das andere, hintere Längsende 1f vom Boden abgehoben wird. Nun wird mittels der Gabelarme 13 (Fig. 4) die Hecktransporteinrichtung H an das offene Längsende 1f herangeführt. Die Einschubgabel 20c mit ihren Einschubgabelarmen 20a und 20b der Hecktransporteinrichtung H wird in die Tasche 1ff am offene Längsende 1f eingeschoben. Ein Verriegelungsbolzen 1d wird durch die Durchbrüche 1c des Trägers und der Einschubgabel 20c geschoben und darin gesichert. Die Hecktransporteinrichtung H hat ein Fahrwerk 20 mit Transporträdern 22 aus Hartgummi. Vier Transporträder 22 sind paarweise an Pendelachsen 21 aufgehängt und laufen in zwei Reihen hintereinander. Damit der Gabelstapler 9 die Einschubgabelarme 20a und 20b der Hecktransporteinrichtung H gut führen kann, sind für seine Gabelarme 13 Aufnahmetaschen 23 vorgesehen.

Fig. 4 und 8 zeigen, daß der Schwanenhals 15 das Längsende 1e des Trägers 1 danach wieder angehoben wird bis die Transporträder 22 auf dem Untergrund A aufsetzen. Der Schwanenhals 15 hebt den Träger 1 an seinem Längsende 1e weiter an bis die Kippstütze freikommt. Die Kippstütze wird entfernt und das Längsende 1e wird auf die gewünschte Höhe abgesenkt. Nun kann der Träger 1 mit seiner Last, beispielsweise dem Waggon 2, von der einen Beladezone, beispielsweise einem Gleisanschluß, in eine andere Ladezone, beispielsweise in den Laderaum eines Ro-Ro-Schiffes, verfahren werden. In der anderen Ladezone werden die Transporteinrichtungen in umgekehrter Reihenfolge wieder entfernt.

Dazu wird das Längsende 1e vom Schwanenhals 15 zunächst angehoben, so daß die Kippstütze untergelegt werden kann. Danach wird das Längsende 1e wieder niedergedrückt. Der Träger 1 kippt um die Drehpunktstelle 19 und das Längsende 1f hebt die Transporträder 22 vom Untergrund A ab. Nun wird der Verriegelungsbolzen 1d herausgezogen; mittels der Gabelarme 13 des Gabelstaplers 9 die Hecktransporteinrichtung H vom Träger 1 entfernt. Der Schwanenhals 15 hebt darauf das Längsende 1e soweit an, daß das Längsende 1f des Trägers 1 auf den Untergrund aufsetzt und die Kippstütze 18 entfernt werden kann. Ist die Kippstütze 18 entfernt, dann senkt der Schwanenhals 15 das Längsende 1e wieder ab bis auch dieses am Untergrund A aufliegt. Nun wird der Verriegelungsbolzen 1d an diesem Längsende 1e entfernt. Der Gabelstapler 9 zieht den Übergangsträger 10 aus dem Längsende 1e heraus. Der fahrwerklose Träger 1 wird mit dem Waggon 2 im Laderaum verlascht.

Die vom Träger 1 entfernten Front- und Hecktransporteinrichtungen F und H werden an einen anderen beladenen Träger 1 angesetzt, nehmen diesen auf und bringen ihn von der einen Ladezone zur anderen Ladezone, beispielsweise zum Laderaum des Ro-Ro-Schiffes. Diese Vorgänge wiederholen sich bis alle zu verladenden Lasten von der einen Ladezone in die anderen verlegt sind. Zum Schluß werden, wenn es gewünscht ist, die Fronttransporteinrichtung F und die Hecktransporteinrichtung H an Bord gebracht, um im Zielhafen zum Entladen eingesetzt zu werden. Die Transporteinrichtungen F und H und die leeren Träger 1 können mit einem anderen Schiff, beispielsweise einem normalen Containerschiff, zum Ausgangshafen zurückgebracht werden.

Die Transportvorrichtung ist auch geeignet, schwere Güter auf dem Landweg von einer Ladezone zu einer anderen zu verfahren.

## Patentansprüche

1. Transportvorrichtung für den Ro-Ro-Betrieb, mittels der Bahnfahrzeuge in Ladezonen von Schiffen einbringbar, in diesen transportierbar und wieder aus ihnen ausbringbar sind, mit einem mit Bahnschienen versehenen Träger (1), auf dem die langgestreckten, mit Rädern versehenen Bahnfahrzeuge (2) mit ihren Rädern ruhen und der mittels Transporträdern (16a,22) von Transporteinrichtungen verfahrbar ist, wobei der Träger (1) und die Transporteinrichtungen (F und H), von denen die eine eine Zugmaschine (F) mit Schwanenhals (15) ist voneinander unabhängig handbare Einheiten sind der Träger (1) außerhalb der Transportzeiten getrennt von den Transporteinrichtungen (F und H) unbeweglich auf einem Untergrund (A) ruht, ganz gleich ob er beladen oder unbeladen ist und nur während seiner Transportzeiten von einer Ladezone zu einer anderen kurzfristig durch das Hinzufügen der Transporteinrichtungen (F und H) verrollbar ist, der Träger (1) als Hohlkörper mit zu seinen Längsenden (1e,1f) hin offenen Taschen (1ee,1ff) zur an sich bekannten Aufnahme von Einschubgabeln (14,20c) ausgebildet ist, und der Träger (1) mittels der Transporteinrichtung (F) an dem Längsende (1e) mittels des Schwanenhalses (15) anheb- und absenkbar ist, **dadurch gekennzeichnet, daß** die als Zugmaschine ausgebildete Transporteinrichtung (F) an dem einen Längsende (1e) in eine offene Tasche (17) eines Übergangsträgers (10) einschiebbar ist, der seinerseits mit einer Einschubgabel (14) in die Taschen (1ee) des Trägers (1) greift, und die andere Transporteinrichtung (H) ein antriebloser Radsatz (H) ist und mit ihrer Einschubgabel (20c) in das offene Längsende (1f) des Trägers (1) einschiebbar bzw. wieder daraus entfernbar ist, wenn der Träger (1) unter Zuhilfenahme zumindest einer Kippstütze (18) von dem Schwanenhals (15) der Zugmaschine (16) verkippt ist.

2. Transportvorrichtung nach Anspruch 1, **dadurch gekennzeichnet, daß** die Transporteinrichtung (H) mit ihren Transporträdern (22) und der Zwischenträger (10) mit offenen Taschen (12,23) versehen sind, die für die Aufnahme der Gabelarme (13) eines Gabelstaplers (9) eingerichtet sind.

3. Transportvorrichtung nach einem der Ansprüche 1 und 2, **dadurch gekennzeichnet, daß** der in der Länge und gegebenenfalls auch in der Breite variable Träger (1) die Länge einer Einheit eines Schienenfahrzeuges aufweisen kann und aus parallelen Doppel-T-Trägern (3) besteht, die in Längsrichtung mittels oben und unten aufgesetzter Deckplatten (4,5) verbunden sind.

4. Transportvorrichtung nach Anspruch 3, **dadurch gekennzeichnet, daß** die Doppel-T-Träger (3) in vorgegebenen Abständen mittels Querwänden (6) verbunden sind.

5. Transportvorrichtung nach einem oder mehreren der Ansprüche 1 bis 4, **dadurch gekennzeichnet, daß** die Bahnschienen (8) innerhalb des Trägers (1) mittels Unterdeckspanten (3e) zusätzlich abgestützt sind.

6. Transportvorrichtung nach einem oder mehreren der Ansprüche 1 bis 5, **dadurch gekennzeichnet, daß** der Träger(1) und die Einschubgabeln (14,20c) mit horizontalen Durchbrüchen (1c) versehen sind, die beim Einschieben so zum Fluchten bringbar sind, daß durch sie Verriegelungsbolzen (1d) schiebbar sind.

7. Transportvorrichtung nach einem oder mehreren der Ansprüche 1 bis 6, **dadurch gekennzeichnet, daß** die Kippstütze (18) aus einem ausreichend druckstabilen Holz besteht.

8. Arbeitsverfahren zur Handhabung der Transportvorrichtung nach einem oder mehreren der Ansprüche 1 bis 7, **dadurch gekennzeichnet, daß** in ein Längsende (1e) des Trägers (1), um ihn verrollbar zu machen, zunächst der Zwischenträger (10) mit seiner Einschubgabel (14) eingesetzt wird, wonach die Transporteinrichtung (F) mit ihrem Schwanenhals dieses Längsende (1e) anhebt und unter den Träger (1) die Kippstütze (18) gelegt wird, die den Träger (1) zu einem Schaukelbalken macht, daß die Transporteinrichtung (F) das angehobene Längsende (1e) danach soweit absenkt, daß sich das andere Längsende (1f) des Trägers (1) bei der nun einsetzenden Schaukelverkippung hebt und in die offene Tasche (1ff) dieses Längsendes (1f) die Einschubgabel (20c) der anderen, mit dem Fahrwerk (20) versehenen Transporteinrichtung (H) einschiebbar ist, daß der Träger (1) nach dem Einschieben dieser Einschubgabel (20c) der Transporteinrichtung (H) mit dem Fahrwerk (20) von der anhebenden Transporteinrichtung (F) wieder angehoben wird bis das Fahrwerk den Untergrund (A) berührt und die Kippstütze (18) entfernt wird, womit die Transportvorrichtung verrollbar ist.

9. Arbeitsverfahren zur Handhabung der Transportvorrichtung nach einem oder mehreren der Ansprüche 1 bis 7, **dadurch gekennzeichnet, daß** der Träger (1), um ihn nach einem Verrollen wieder unbewegbar zumachen, zunächst an seinem einen Längsende (1e) mittels der zum Anheben eingerichteten Transporteinrichtung (F) soweit angehoben wird, daß unter ihn die Kippstütze (18) legbar ist, daß die anhebende Transporteinrichtung (F) das angehobene Längsende (1e) danach soweit absenkt, daß sich das andere Längsende (1f) des Trägers (1) bei der nun einsetzenden Schaukelverkippung hebt und aus dessen Tasche (1ff) die Einschubgabel (20c) der mit dem Fahrwerk (20) versehenen Transporteinrichtung (H) herausgezogen wird, und daß der Träger (1) nach dem Herausziehen dieser Einschubgabel (20c) der mit dem Fahrwerk versehenen Transporteinrichtung (H) am abgesenkten Längsende (1e) bis zum Aufsetzen des anderen Längsendes (1f) auf den Untergrund (A) angehoben und die Kippstütze (18) entfernt wird, wonach der Träger (1) durch das erneute Absenken des angehobenen Längsendes (1e) von der zum Anheben eingerichteten Transporteinrichtung (F) vollends zum Untergrund (A) abgesenkt wird und wieder unbeweglich ist, wonach der Zwischenträger (10) entfernt wird.

## Claims

1. Transfer device for Ro-Ro operation able to introduce rail vehicles into loading zones of ships, to transfer in them, and then to remove from them, with a support (1) provided with rails, on which the elongated rail vehicles (2) provided with wheels rest with their wheels, and on which transfer devices can be moved by means of transfer wheels (16a, 22),
wherein the support (1) and the transfer devices (F and H), one of which is a traction engine (F) with a swan's neck (15), are units that can be handled independently,
the support (1) rests immovably on ground (A) separated from the transfer devices (F and H) outside the transfer times, regardless of whether it is loaded or unloaded, and during its transfer times it can be quickly be rolled from one loading zone to another by adding the transfer devices (F and H),
the support (1) is designed as a hollow body with pockets (1ee, 1ff) opening towards its longitudinal ends (1e, 1f) for receiving insert forks (14, 20c) by a method of prior art, and wherein the support (1) can be raised and lowered by means of the transfer device (F) at the longitudinal end (1e) by means of the swan's neck (15), **characterised in that** the transfer device (F) designed as a traction engine can be pushed at one longitudinal end (1e) into an open pocket (17) of an intermediate support (10), which in turn engages with an insert fork (14) in the pockets (1ee) of the support (1), and **in that** the other transfer device (H) is a drive-less wheelset (H) and can be inserted with its insert fork (20c) into the open longitudinal end (1f) of the support (1) and again removed from it when the support (1) is tipped from the swan's neck (15) of the traction engine (16) with the aid of at least one tilting support (18).

2. Transfer device according to Claim 1, **characterised in that** the transfer device (H) is provided with its transfer wheels (22) and the intermediate support (10) is provided with open pockets (12, 23) which are designed for receiving the fork arms (13) of a fork lift truck (9).

3. Transfer device according to one of Claims 1 and 2, **characterised in that** the support (1), variable in length and if necessary in width as well, may exhibit the length of one unit of a rail vehicle and consist of parallel double-T supports (3) which are connected in the longitudinal direction by means of cover plates (4, 5) installed above and below.

4. Transfer device according to Claim 3, **characterised in that** the double T supports (3) are connected at predetermined distances by means of transverse walls (6).

5. Transfer device according to one or more of Claims 1 to 4, **characterised in that** the rails (8) inside the support (1) are additionally supported by under-cover ribs (3e).

6. Transfer device according to one or more of Claims 1 to 5, **characterised in that** the support (1) and the insert forks (14, 20c) are provided with horizontal openings (1c) which, at the time of insertion, can be brought flush with each other so that locking bolts (1d) can be slid through them.

7. Transfer device according to one or more of Claims 1 to 6, **characterised in that** the tilting support (18) consists of a sufficiently pressure-stable piece of wood.

8. Working method for handling the transfer device according to one or more of Claims 1 to 7, **characterised in that** the intermediate support (10) is first inserted with its insert fork (14) into a longitudinal end (1e) of the support (1), to enable it to be rolled, whereupon the transfer device (F) raises this longitudinal end (1e) with its swan's neck and the tilting support (18) is placed underneath the support (1), which support turns the support (1) into a rocking beam, **in that** the transfer device (F) then lowers the raised longitudinal end (1e) to the extent that the other longitudinal end (1f) of the support (1) raises during the rocking/tilting action that now commences, and the insert fork (20c) of the other transfer device (H) provided with the running gear (20) can be inserted into the open pocket (1ff) of this longitudinal end (1f), **in that** the support (1) is again raised by the raising transfer device (F) after insertion of this insert fork (20c) of the transfer device (H) with the running gear (20) until the running gear contacts the ground (A) and the tilting support (18) is removed with which the transfer device can be rolled.

9. Working method for handling the transfer device according to one or more of Claims 1 to 7, **characterised in that** in order to render it immovable again after rolling, the support (1) is first raised at one of its longitudinal ends (1e) by means of the transfer device (F) set for raising until the tilting support (18) can be placed underneath it, **in that** the raising transfer device (F) then lowers the raised longitudinal end (1e) until the other longitudinal end (1f) of the support (1) is raised during the rocking/tilting movement that now commences, and the insert fork (20c) of the transfer device (H) provided with the running gear (20) is pulled out of its pocket (1ff), and **in that** the support (1) is raised after this insert fork (20c) of the transfer device (H) provided with the running gear is pulled out at the lowered longitudinal end (1e) until the other longitudinal end (1f) is deposited on the ground (A), and the tilting support (18) is removed, whereupon the support (1) is lowered fully to the ground (A) and is again rendered immovable by renewed lowering of the raised longitudinal end (1e) by the transfer device (F) set for raising, whereupon the intermediate support (10) is removed.

## Revendications

1. Dispositif de transport destiné à l'exploitation roll-on/roll-off, au moyen duquel des véhicules ferroviaires peuvent être amenés dans des zones de chargement de navires, transportés dans ceux-ci et ressortis de ceux-ci, comportant un support (1) pourvu de rails de chemin de fer, sur lequel les véhicules ferroviaires (2) de forme allongée pourvus de roues reposent par l'intermédiaire de leurs roues et lequel peut être déplacé au moyen de roues de transport (16a, 22) de dispositifs de transport, le support (1) et les dispositifs de transport (F et H), dont l'un est un véhicule tracteur (F) comportant un col de cygne (15), étant des unités utilisables indépendamment l'une de l'autre, le support (1) séparé des dispositifs de transport (F et H) reposant de façon non mobile sur une surface (A) en dehors des temps de transport, qu'il soit chargé ou non chargé, et pouvant être déplacé à court terme d'une zone de chargement vers une autre uniquement pendant ses temps de transport suite à l'adjonction des dispositifs de transport (F et H), le support (1) étant conformé en tant que corps creux comportant des logements (lee, 1ff) ouverts en direction de ses extrémités longitudinales (1e, 1f) destinés à recevoir de façon connue en soi des fourches insérables (14, 20c) et le support (1) pouvant être levé et abaissé à son extrémité longitudinale (1e) au moyen du col de cygne (15) du dispositif de transport (F), **caractérisé en ce que** le dispositif de transport (F) conformé en tant que véhicule tracteur peut être inséré à une extrémité longitudinale (1e) dans un logement (17) ouvert d'un support intermédiaire (10), lequel s'engage de son côté au moyen d'une fourche insérable (14) dans le logement (1ee) du support (1) et **en ce que** l'autre dispositif de transport (H) est un essieu monté (H) non entraîné et peut être inséré dans ou selon le cas retiré de l'extrémité longitudinale (1f) ouverte du support (1) au moyen de sa fourche insérable (20c), lorsque le support (1) est basculé par le col de cygne (15) du véhicule tracteur (16) au moyen d'au moins un support de basculement (18).

2. Dispositif de transport selon la revendication 1, **caractérisé en ce que** le dispositif de transport (H) avec ses roues de transport (22) et le support intermédiaire (10) sont pourvus de logements (12, 23) ouverts, lesquels sont aménagés de manière à recevoir les bras de fourche (13) d'une gerbeuse à fourche (9).

3. Dispositif de transport selon la revendication 1 ou 2, **caractérisé en ce que** le support (1) variable en longueur et le cas échéant également en largeur peut présenter la longueur d'une unité d'un véhicule ferroviaire et est constitué de poutres en double T (3) parallèles, lesquelles sont reliées dans le sens longitudinal au moyen de plaques de recouvrement supérieures et inférieures (4, 5) rapportées.

4. Dispositif de transport selon la revendication 3, **caractérisé en ce que** les poutres en double T (3) sont reliées à des distances prédéfinies au moyen de parois transversales (6).

5. Dispositif de transport selon l'une quelconque ou plusieurs des revendications 1 à 4, **caractérisé en ce que** les rails de chemin de fer (8) sont supportés à l'intérieur du support (1) au moyen de membrures (3e) sous-jacentes au support (1).

6. Dispositif de transport selon l'une quelconque ou plusieurs des revendications 1 à 5, **caractérisé en ce que** le support (1) et les fourches insérables (14, 20c) sont pourvus d'ouvertures horizontales (1c), lesquelles peuvent être amenées en alignement lors de l'insertion, de telle sorte que des axes de verrouillage (1d) peuvent être glissés dans celles-ci.

7. Dispositif de transport selon l'une quelconque ou plusieurs des revendications 1 à 6, **caractérisé en ce que** le support de basculement (18) est dans une essence de bois suffisamment stable à la compression.

8. Procédé destiné à l'utilisation du dispositif de transport selon l'une quelconque ou plusieurs des revendications 1 à 7, **caractérisé en ce que** le support intermédiaire (10) est d'abord inséré avec sa fourche insérable (14) dans une extrémité longitudinale (1e) du support (1), afin de rendre celui-ci déplaçable, après quoi, le dispositif de transport (F) lève ladite extrémité longitudinale (1e) au moyen de son col de cygne et le support de basculement (18), lequel transforme le support (1) en poutre à bascule, est placé au-dessous du support (1), **en ce que** le dispositif de transport (F) abaisse ensuite l'extrémité longitudinale (1e) levée, jusqu'à ce que l'autre extrémité longitudinale (1f) du support (1) se lève lors du basculement à présent amorcé et que la fourche insérable (20c) de l'autre dispositif de transport (H) pourvu du mécanisme de déplacement (20) puisse être insérée dans le logement (1ff) ouvert de ladite extrémité longitudinale (1f) et **en ce qu'**après l'insertion de ladite fourche insérable (20c) du dispositif de transport (H) comportant le mécanisme de déplacement (20), le support (1) est à nouveau levé par le dispositif de transport (F) élévateur jusqu'à ce que le mécanisme de déplacement (20) touche la surface (A), et le support de basculement (18) est enlevé, après quoi le dispositif de transport peut être déplacé.

9. Procédé destiné à l'utilisation du dispositif de transport selon l'une quelconque ou plusieurs des revendications 1 à 7, **caractérisé en ce que** le support (1), afin de le rendre à nouveau non mobile après un déplacement, est d'abord levé à son extrémité longitudinale (1e) au moyen du dispositif de transport (F) équipé pour lever, jusqu'à ce que le support de basculement (18) puisse être placé au-dessous dudit support (1), **en ce que** le dispositif de transport (F) élévateur abaisse ensuite l'extrémité longitudinale (1e) levée, jusqu'à ce que l'autre extrémité longitudinale (1f) du support (1) se lève lors du basculement à présent amorcé et que la fourche insérable (20c) du dispositif de transport (H) pourvu du mécanisme de déplacement (20) puisse être retirée de son logement (1ff) et **en ce que** le support (1), après le retrait de ladite fourche insérable (20c) du dispositif de transport (H) pourvu du mécanisme de déplacement (20), est levé à l'extrémité longitudinale (1e) abaissée jusqu'à ce que l'autre extrémité longitudinale (1f) repose sur la surface (A) et le support de basculement (18) est enlevé, après quoi le support (1) est abaissé complètement sur la surface (A) suite au rabaissement de l'extrémité longitudinale (1e) levée par le dispositif de transport (F) équipé pour lever et est à nouveau non mobile, après quoi le support intermédiaire (10) est enlevé.
